# EUROPEAN PATENT APPLICATION

(11) **EP 4 729 169 A1**
(43) Date of publication of application: **22.04.2026**
(21) Application number: 24306754.3
(22) Date of filing: 21.10.2024
(51) Int. Cl.: B01J 20/22, B01J 20/30

(54) **PROCESS FOR THE SYNTHESIS OF HKUST-1 METAL ORGANIC FRAMEWORKS**

(71) Applicant: Fundació Institut Català de Nanociència i Nanotecnologia (ICN2), 08193 Bellaterra (ES); Institució Catalana De Recerca I Estudis Avançats (ICREA), 08010 Barcelona (ES); Centre National de la Recherche Scientifique (CNRS), 75016 Paris (FR); Mof Apps AS, 0873 Oslo (NO); Université Claude Bernard Lyon 1 (UCBL), 69100 Villeurbanne (FR)
(72) Inventor: MASPOCH COMAMALA, DANIEL, 08197 VALLDOREIX (ES); IMAZ GABILONDO, INHAR, 08240 MANRESA (ES); FARRUSSENG, DAVID, 69380 BELMONT D'AZERGUES (FR); SEIDENADER, NIK, 80638 MÜNCHEN (DE)
(74) Representative: ZBM Patents - Zea, Barlocci & Markvardsen

(57) **Abstract**

The present disclosure refers to a process for the preparation of a dry crystalline HKUST-1 metal organic framework which comprises: a) spray drying a metal oxide or hydroxide and a tridentate organic ligand in the presence of a solvent, wherein the reaction of the metal oxide or hydroxide with the tridentate organic ligand to yield the HKUST-1 and the drying of the obtained HKUST-1 take place simultaneously inside the spray dryer, and b) collecting the formed dry crystalline HKUST-1.

## Description

### Technical Field

The present invention is related to the field of metal organic chemistry. The invention provides a method for large-scale industrial synthesis of HKUST-1 metal organic frameworks.

### Background Art

Metal organic frameworks, also termed MOFs, form an interesting class of microporous or mesoporous substances having characteristics which allow their use in many technical fields, such as gas storage, separation or controlled release of chemical substances, catalysis and drug delivery. These potential applications are a direct consequence of the porous architecture of MOFs, which leads to high specific surface area of these materials.

MOFs are composed of two major components: a metal ion or cluster of metal ions and an organic molecule that plays the role of a ligand. The organic units are typically di-, tri- or polydentate ligands. The choice of metal and organic ligand has significant effects on the structure and properties of the MOF. For example, the metal coordination preference influences the size and shape of pores by dictating how many ligands can bind to the metal and in which orientation.

HKUST-1 (HKUST-1 = Hong Kong University of Science and Technology-1), also known as MOF-199 or Cu₃(BTC)₂ (BTC = benzene-1,3,5-tricarboxylate) is one of the most representative MOFs. Due to its high specific surface area, excellent thermal stability, and large porosity, it has been extensively researched. In particular, studies on the structural regulation and potential applications of HKUST-1 and its composites have become a major focus in the scientific field. The most studied applications include: gas storage (in particular CO₂ and hydrogen storage), separation, adsorption, electrocatalysis, drug delivery, sensor, and photodegradation.

The diverse industrial applications have boosted the demand for these materials. So far, HKUST-1 can be successfully synthesized by solvothermal, hydrothermal, microwave-assisted, sol-gel, and electrochemical methods. Unfortunately, these methods are hardly scalable.

One scalable process for the production of MOFs in general was disclosed in EP2764004. Said process comprises spray drying a metal ion and an organic ligand which is at least bidentate into a spray dryer in the presence of a solvent. Reaction times needed for the synthesis of MOFs are thereby greatly reduced and dry crystalline MOFs, such as HKUST-1 and other Cu-based MOFs, are provided directly out of the initial liquid reagents. The process has the advantage of being continuous and allows for the recovery of the material without filtration.

Despite this being a huge advance in the field, the spray-drying process disclosed in the prior art involves the use of metal salts, particularly metal nitrates, which require an aqueous phase washing, resulting in re-suspension and, ultimately, slow filtration, which hinders the large-scale production of HKUST-1.

Thus, even though considerable improvements have been made in the preparation of MOFs at industrial conditions, there is still a need to improve said methods, especially in the context of producing HKUST-1.

### Summary of Invention

The shortcomings mentioned above have been solved by the inventors by developing a more efficient process for synthesizing industrially scalable porous materials of the HKUST-1 type which does not need washing and filtration steps.

A first aspect of the disclosure refers to a process for the preparation of a HKUST-1 dry crystalline framework which comprises:
a) spray drying a divalent metal oxide or hydroxide and a tridentate organic ligand in the presence of a solvent, wherein the reaction of the divalent metal oxide or hydroxide with the tridentate organic ligand to yield the HKUST-1 and the drying of the obtained HKUST-1 take place simultaneously inside the spray dryer, and
b) collecting the formed dry crystalline HKUST-1.

The inventors have surprisingly found that using a metal oxide or hydroxide in the spray drying process instead of a metal salt, such as a nitrate, allows for the direct synthesis of HKUST-1 materials without any additional chemicals and without the need for aqueous phase washing and subsequent filtration steps. This greatly improves the efficiency of the process, resulting in a low-cost, time efficient synthesis method that allows the production of high-quality HKUST-1 at a competitive price. Moreover, the synthesis may be carried out using water as solvent, which brings about substantial benefits in terms of absence of toxicity, reduced environmental hazards and reduced cost. The process is therefore far more efficient, environmentally friendly and economical.

As shown in the example below, dry crystalline HKUST-1 was directly obtained on an industrial-scale atomizer with the herein disclosed process without the need of any washing, filtration and/or further purification steps with water as a solvent.

In a second aspect, the disclosure provides a dry crystalline HKUST-1 obtainable by a process as defined in the first aspect.

### Detailed description of the invention

All terms as used in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As used herein, the indefinite articles "a" and "an" are synonymous with "at least one" or "one or more." Unless indicated otherwise, definite articles used herein, such as "the" also include the plural of the noun.

HKUST-1 (HKUST: Hong Kong University of Science and Technology) which is also called MOF-199, or Cu₃(BTC)₂ (BTC: benzene-1,3,5-tricarboxylate), is a metal organic framework built up of dimeric metal units, which are connected by benzene-1 ,3,5-tricarboxylate linker molecules. Benzene-1,3,5-tricarboxylate is also known as trimesic acid.

Cu²⁺ was used as metal center in the first synthesized HKUST-1 material, but the HKUST-1 structure can also be obtained with other metals. The oxidation state of most used metals is +II, which results in a neutral overall framework. In the case of trivalent metals (oxidation state +III), the overall framework is positively charged and requires anions to compensate the charge and guarantee charge neutrality. Metals contained in HKUST-1 structures may be preferably selected from Cu²⁺, Mo²⁺,Fe²⁺, Fe³⁺,Cr²⁺, Ni²⁺, Zn²⁺, Ru²⁺, Ru³⁺, Mn²⁺, and Co²⁺.

In the sense of the present invention HKUST-1 refers not only to Cu₃(BTC)₂ but also encompasses other metal organic frameworks with the HKUST-1 structure (i.e. HKUST-1 analogues).

A "spray dryer" is a device well known in the state of the art where a liquid input stream is sprayed in small droplets through a nozzle (or atomizer) into a hot gas stream. The term "spraying" (also known as atomizing) refers to the process of forming a spray, which is a dynamic collection of drops dispersed in a gas. Spray-drying is based on atomization of a feed solution into aerosol droplets that are subsequently brought into contact with each other and suspended within a hot gas stream, which induces solvent evaporation. The dried particles are transported to a collector, generally located at the bottom of a gas-stream cyclone generated by an aspirator located down-stream of the outlet filter. This arrangement prevents particles from entering the exhaust gas. Importantly, the whole process can be run continuously in a closed loop, which is advantageous both technically and environmentally.

The spray-drying synthesis of coordination compounds, such as MOFs, relies on the formation and further drying of micrometric droplets containing the metal ion and the organic linker. Rapid evaporation of the solvent induces formation, at the air-liquid interface, of MOF nanocrystals that, upon drying, accumulate and merge into compact/hollow, often spheroid MOF. Although the aforementioned general approach is very wide in scope, some products require major adaptations for efficient synthesis.

In particular, as outlined above, the production of HKUST-1 in industrial scale by conventional spray-drying is carried out using metal salts, usually metal nitrates. Use of metal salts requires an aqueous phase washing of the obtained HKUST-1 product, resulting in re-suspension and ultimately slow filtration, all of which hinders large-scale production. This problem has been solved by the present inventors by using metal oxides or hydroxides instead of metal salts in the spray-drying process, as disclosed in the first aspect. Surprisingly, this allows to dispense with all the washing and downstream purification steps, thus resulting in a quicker, more efficient process .

The process disclosed herein additionally maintains all the advantages of the spray-drying synthesis process. As compared to other HKUST-1 production processes, the process of the invention greatly reduces the reaction time needed for the synthesis of HKUST-1. The process of the first aspect also has the advantage that it directly produces dry crystalline HKUST-1 out of the initial liquid reagents at mild conditions which can be performed in regular industrial spray dryer devices. Thus, the process of the first aspect produces large quantities of dry HKUST-1 crystals in a very short time. Further, the process can be applied to a continuous or semi-continuous flow production process. The reagents can be continuously sprayed at the top of the spray drying apparatus while the newly formed crystals fall to the bottom and can be collected in the drum.

Typically, the raw product is obtained as a dry powder containing small HKUST-1 crystals, although it may also be obtained as agglomerate. As crystals are formed inside the spray dryer and fall to the bottom, new reactants are sprayed and the product is continuously produced. The only limitation of the process is the capacity of the drum, and even then, the process needs to be stopped only time enough for the drum to be emptied. Furthermore, this limitation can be eradicated by installing a continuous unloading system for the drum.

The crystals directly obtained by the process of the invention may have a purity up to 99% (w/w), for example a purity of 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99% (w/w). The expression "% w/w" refers to percentage by weight of a compound with respect to the total weight of the composition. Additional washing, filtering and drying steps are not required but may be performed if wishing to increase the purity of the obtained HKUST-1. Further, HKUST-1 crystals obtained by the present process have particularly small dimensions. The the small size of the HKUST-1 crystals obtainable by the process of the invention can provide special properties, for example, for gas sorption applications.

HKUST-1s are particular materials in that they are highly porous. Importantly, the HKUST-1 obtained by the method of the invention have a high specific surface area. The specific surface area may be measured by the Brunauer-Emmett-Teller (also known as BET) method. As shown in the example below, the specific surface area as measured BET method for the HKUST-1 obtained by the process of the invention is very high.

The process of the invention thus provides for the short-time, large-scale production of HKUST-1 with yields comparable to previously known processes. This is a versatile and tunable process that can provide micrometer spherical beads/superstructures. Altogether, the present invention provides an efficient, convenient and economical process for use in industrial HKUST-1 preparation.

The process of the first aspect thus requires a metal ion provided by a metal oxide or metal hydroxide. The metal ion coordinates with the tridentate organic ligand to form the HKUST-1 crystal structure. In one embodiment, the metal is a divalent metal, for example, a divalent metal selected from the group consisting of Zn²⁺, Co²⁺, Be²⁺, Mg²⁺, Ca²⁺, Sr²⁺, Ba²⁺, Sc²⁺, Y²⁺, Ti²⁺, Zr²⁺, V²⁺, Nb²⁺, Ta²⁺, Cr²⁺, Mo²⁺, W²⁺, Mn²⁺, Re²⁺, Fe²⁺, Ru²⁺, Os²⁺, Rh²⁺, Ir²⁺, Ni²⁺, Pd²⁺, Pt²⁺, Cu²⁺, Ag²⁺, Au²⁺, Cd²⁺, Hg²⁺, B²⁺, Al²⁺, Ga²⁺, In²⁺, Si²⁺, Ge²⁺, Sn²⁺, Pb²⁺, As²⁺, Te²⁺, La²⁺, Ce²⁺, Pr²⁺, Nd²⁺, Sm²⁺, Eu²⁺, Gd²⁺, Tb²⁺, Db²⁺, Tm²⁺, Yb²⁺, and La²⁺. In particular embodiments, the metal is a transition metal. In preferred embodiments, the metal is selected from Cu²⁺, Zn²⁺, Fe²⁺, and Co²⁺, in particular the divalent metal is Cu²⁺. Consequently, the metal oxide or hydroxide of the first aspect is in particular selected from the group consisting of CuO, ZnO, FeO, and CoO, and the metal hydroxide is selected from the group consisting of Cu(OH)₂, Zn(OH)₂, Fe(OH)₂, and Co(OH)₂.

In a particular embodiment, the process of the invention is carried out with CuO or Cu(OH)₂, preferably with Cu(OH)₂.

The process of the first aspect also requires a tridentate organic ligand. A "tridentate organic ligand" is understood as an organic compound that may coordinate three metal ions through coordination bonds. The ability to coordinate metal ions is conferred by certain functional groups. Non-limiting functional groups that can be contained by the organic ligand to form a MOF according to the invention are -COOH, -CSSH, -NO₂, - B(OH)₂, -SO₃H, -Ge(OH)₃, -Sn(OH)₃, -Si(SH)₄, -Ge(SH)₄, -Sn(SH)₃, -PO₃H, -AsO₃H, - AsO₄H, -P(SH)₃, As(SH)₃, C₄H₂O₄, -RSH, -RNH₂, -RNR-, -ROH, -RCN, -PO(OR)₂, -RN₃, where R is hydrogen, alkyl, alkylene, preferably C1, C2, C3, C4 or C5 alkylene, or aryl group, preferably comprising 1 or 2 aromatic nuclei.

In one particular embodiment, the tridentate organic ligand is a tricarboxylic acid. In a more particular embodiment, the tricarboxylic acid has formula I: 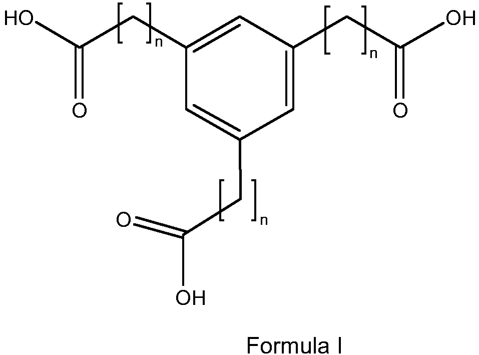 wherein n is an integer from 0 to 3, more in particular from 0 to 1.

In a preferred embodiment, the tridentate organic ligand is benzene-1,3,5-tricarboxylic acid (i.e. n is 0 in formula I).

In one particularly preferred example, the process of the first aspect is carried out with benzene-1,3,5-tricarboxylic acid and Cu(OH)₂.

In one embodiment, the process is carried out with excess ligand. Excess ligand may improve yield. In another particular embodiment, stoichiometric amounts of the precursors, i.e. the metal oxide or hydroxide and tridentate organic ligand, are used in the process. This avoids obtaining impurities together with the HKUST-1 product, which is a substantial advantage. In a particular embodiment, the molar ratio of metal oxide or hydroxide to tridentate organic ligand is from 2:1 to 1:1, in particular 1.5:1.

The process of the first aspect also requires a solvent. The term "solvent" relates to individual solvents and to mixtures of different solvents (solvent system). The solvent can be any aqueous or non-aqueous solvent. In a preferred embodiment, the solvent is selected from the group consisting of water, (C1-C6)-alcohols, (C5-C7)-alkanes, alkenes, (C3-C8)-cycloalkanes, N,N-dimethyl formamide (DMF), N,N-diethyl formamide (DEF), dimethyl sulfoxide (DMSO), dioxane, chloroform, dichloromethane, diethyl ether, acetonitrile, toluene, benzene, tetrahydrofuran (THF), chlorobenzene, ethylene glycol, and mixtures thereof. Preferred alcohols are methanol, ethanol and isopropanol. Preferred alkanes are hexane, heptane and pentane. In one embodiment the solvent is selected from water, alcohol, and DMF. In another embodiment, the solvent is DMF. In a preferred embodiment the solvent is water. The solvent in the first aspect may also be a solvent system containing more than one of the above solvents, for example, the solvent system may contain two, three or four different solvents. Preferably the solvent is water or a solvent system comprises water. In a particular embodiment the solvent is water. In another particular embodiment the solvent is a solvent system consisting of water and (C1-C6)-alcohol. In a more particular embodiment, the solvent is a solvent system consisting of water and ethanol, preferably more water than ethanol, for example water:ethanol 7:3 (v/v).

Atomization of the feed solution(s) containing the precursors, i.e. the metal oxide or hydroxide and tridentate organic ligand, can be considered the central step of spray-drying. There are several ways in which the reagents can be fed to the spray dryer. For instance, a solution comprising both the metal oxide or hydroxide, and the ligand can be sprayed into the spray dryer apparatus in the presence of a solvent. The moment this solution is sprayed into the spray dryer it encounters the gas stream that is flowing through the inside of the spray-dryer, thereby creating a shear field that atomizes the solution into droplets. Thus, in one embodiment, the process comprises spraying a solution containing both the metal oxide or hydroxide and the tridentate organic ligand into a spray dryer in the presence of a solvent. In this embodiment, the metal oxide or hydroxide and the tridentate organic ligand are placed in contact in the presence of the solvent before spray drying. This direct injection strategy is straightforward and convenient for precursor solutions that do not undergo any undesired reactions before spray-drying.

However, some precursor solutions are unstable because they contain highly reactive reagents. In these cases, the precursor solutions must be mixed shortly before or immediately after atomization, which can be done by either of two methods: (i) use of T-junction that combines two independently pumped solutions into a single mixed solution that is immediately introduced into the nozzle; or (ii) use of a three-fluid nozzle, which can simultaneously atomize two independent solutions via three concentric channels: one for each liquid solution and one for the gas stream. In this latter configuration, the two solutions are only mixed when they are already atomized via collision of the aerosol droplets in the drying chamber. Thus, in another embodiment, the process of the invention comprises simultaneously spraying two liquid solutions, one containing the metal oxide or hydroxide and another containing the tridentate organic ligand, into a spray dryer in the presence of a solvent.

Some precursor solutions benefit from a pre-treatment. For example, some precursor solutions can first be activated before they undergo chemical reaction. This can be resolved by a continuous flow-assisted approach, whereby a continuous-flow reactor is coupled to the entrance of the spray dryer. In this embodiment, the precursor solution is pumped and directed into a continuous coil flow reactor encased in a thermostatic oil tank, where it is heated at a certain temperature. Then, the activated solution is automatically injected into the spray-dryer. In a preferred embodiment, the precursor solution containing the metal oxide or hydroxide and the tridentate organic ligand is pre-treated before spray drying (pre-spraying activation). Pre-spraying activation may be achieved by incubating the precursor solution with or without heating for a certain amount of time to form Secondary Building Units (SBUs).

By "pre-spraying activation", also herein termed as "pre-treatment" it is meant the process by which the reagents form SBUs before spray-drying. "SBUs" are molecular complexes and cluster entities in which ligand coordination modules and metal coordination environments can be utilized in the transformation of these fragments into extended porous frameworks.

The pre-treatment (pre-spraying activation) may comprise, for example, incubating the precursor solution at a temperature from 10 °C to 150 °C. In another embodiment, the pre-treatment comprises incubating the precursor solution at a temperature from 15 °C to 120 °C. In another embodiment the pre-treatment comprises incubating the precursor solution at a temperature from 15 to 100 °C. In another embodiment the pre-treatment comprises incubating the precursor solution at a temperature from 15 to 80 °C. In another embodiment the pre-treatment comprises incubating the precursor solution at a temperature from 18 to 50 °C. In a particular embodiment the pre-treatment comprises incubating the precursor solution at a temperature from 15 to 40 °C, or from 18 to 30 °C, for example 18 °C, 19 °C, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 36 °C, 37 °C, 38 °C, or 39 °C. Preferably, the pre-treatment comprises incubating at room temperature.

The pre-treatment time may be from 30 min to 5 days. In one embodiment, the pre-treatment time is from 1 h to 2 days. In another embodiment the pre-treatment time is from 3 h to 30 h. In another embodiment the pre-treatment time is from 6 h to 24 h. In another embodiment the pre-treatment time is from 10 h to 24 h. In a another particular embodiment the pre-treatment time is from 10 to 20 h, more in particular from 14 to 18 h, preferably around 16 h. In a very particular embodiment, the pre-treatment is carried out at a temperature from 18 to 25 °C during around 10 to 24 h. Preferably, the pre-treatment is carried out at room temperature during around 16 h. The pre-treatment may be preferably performed under some kind of stirring.

In one embodiment, the process of the disclosure also comprises the addition of a base. The synthesis of MOFs may benefit from the presence of a base in the reaction mixture, since the base can further reduce the reaction time and/or the reaction temperature. The base can be sprayed into the spray dryer together with one of the reactants, together with the solvent, it can be simultaneously sprayed through a different nozzle, or a combination thereof. Preferably, the base is not contained in the liquid solution containing both the metal oxide and the ligand. In principle any base can be used in the method of the invention. However, preferred bases are selected from the group consisting of metal alkaline or earth alkaline hydroxides, amines, metal alkaline or earth alkaline carbonates, metal alkaline or earth alkaline acetates, pyridines, azoles, diazines, and mixtures thereof.

Any regular spray dryer can be employed to produce dry crystalline HKUST-1 according to the first aspect of the disclosure. Preferably, large industrial spray dryers are used. Such industrial spray dryers can produce very large quantities of HKUST-1 according to the present method in short times. The spray dryer must have as many nozzles as are required for the spraying of the reactants, solvents and, optionally, the base. Usually, air is employed as the hot gas stream, however, other gases can be employed, such as nitrogen. Industrial spray dryers have large capacity drums for product collection. Preferably, the spray dryer drum is coupled to a powder-removing device. The device removes the formed HKUST-1 powder at regular intervals, making place for newly synthesized HKUST-1, such that the production must not be regularly stopped to empty the drum. Thus, in a particular embodiment, the process for the preparation of a dry crystalline HKUST-1 according to the disclosure is a continuous process.

As mentioned above, the preparation of HKUST-1 according to the present process can proceed at mild conditions, such that it is particularly appropriate for large-scale industrial production. The reaction temperature inside the spray dryer can be comprised between 20 and 350 °C but, in particular, the temperature is between 50 and 250 °C, more particularly between 60 and 200 °C, more particularly between 80 and 200 °C, more particularly between 100 and 180 °C, and still more particularly between 120 and 180 °C. In a preferred embodiment the temperature inside the spray dryer is around 150 °C.

As mentioned above, the reaction time inside the spray-dryer required for the formation of HKUST-1 according to the present process is surprisingly short. Usually, the spray-drying time is below 1 hour to obtain the dry product. In most embodiments the spay-drying time to form the dry crystalline HKUST-1 takes from 10 s to 1 h. In particular embodiments the spay-drying is from 10 s to 30 min, or from 10 s to 15 min, or from 20 s to 10 min, or from 20 s to 5 min, or from 10 s to 2 min, or from 10 s to 1 min, or from 10 s to 40 s, or from 10 s to 30 s.

The person skilled in the art is aware that the reaction parameters may need some adjustments for each HKUST-1 product and/or each spray-dryer. The reaction parameters may also vary depending on whether a pre-treatment is carried out. For instance, reagent concentrations, choice of solvent, choice of base, gas spray flow, drying gas flow, feed flow and temperature, among others, are parameters that may be adjusted. The required adjustments are within the knowledge of the skilled person.

The dry crystalline HKUST-1 obtained by the above process may be activated (post-spraying activation). Said activation of the crystalline HKUST-1 may be achieved by thermal treatment. In one embodiment, the obtained HKUST-1 is activated at a temperature from 100 to 200 °C. In another embodiment the obtained HKUST-1 is activated at a temperature from 120 to 180 °C. In another embodiment the obtained HKUST-1 is activated at a temperature from 130 to 170 °C. In another embodiment the obtained HKUST-1 is activated at a temperature from 140 to 160 °C. In a preferred embodiment the obtained HKUST-1 is activated at a temperature around 150 °C.

As outlined above, the process disclosed herein directly provides dry crystalline HKUST-1 without the need of washing steps and subsequent filtration. Said HKUST-1 crystals have a high purity grade. Nevertheless, they can be subjected to further purification steps. Thus, in one embodiment, the process of the invention additionally comprises a purification step. Usually, this purification step comprises washing the HKUST-1 crystals with an appropriate solvent and drying. This purification step is also known as "extraction step" because it removes the solvent or other molecules that are retained in HKUST-1 pores. By washing the porous material with an appropriate solvent, the new solvent molecules replace whatever molecules had remained in the pores and are subsequently removed by a gentle evaporation process. The solvent used for extraction can be identical to or different from that used for the reaction of the at least one metal ion with the at least one organic ligand which is at least bidentate. As non-limiting suitable solvents for the purification or extraction step the following can be mentioned: water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof.

Any HKUST-1 can be prepared following the present process with relatively high purity and good yield. The examples below show the production of HKUST-1, but this does not limit the scope of the present disclosure. As skilled person would indeed acknowledge that any metal organic framework with HKUST-1 structure may be obtained by the process of the invention. In one preferred embodiment, the HKUST-1 prepared by the process of the present disclosure is Cu₃(BTC)₂.

A second aspect of the present disclosure refers to a dry crystalline HKUST-1 obtainable by the process of the first aspect. All embodiments and examples defined above for the first aspect also apply to the second aspect.

The dry HKUST-1 crystals obtained by the present process have a high specific surface area. In some embodiments, the HKUST-1 obtained by the method of the invention has a specific surface area measured as a BET equal to or greater than 1000 m²/g, in particular, a BET equal to or greater than 1500 m²/g, for example BET around 1600 m²/g.

The dry HKUST-1 crystals obtained by the present process often have particularly small dimensions. In one embodiment the HKUST-1 crystals have a size ranging between 0.01 and 100 µm. In another embodiment, the size of the obtained HKUST-1 crystals is between 0.01 to 1 µm. Additionally, the present process can yield HKUST-1 crystals in the form of spherical microcapsules, which are maintained after the purification step. Such HKUST-1 capsules can be obtained by employing low reactant concentrations. Thus, in a particular embodiment the obtained crystalline HKUST-1 product is in the form of spherical microcapsules.

The HKUST-1 may be subjected to post-synthetic modifications, in particular to covalent post-synthetic modifications. Covalent post-synthetic modification (PSM) involves an organic reaction carried out on the organic linker while maintaining the HKUST-1 integrity and may be desirable in order to introduce a chemical functionality, for example, an amine, aldehyde or carboxy functional group. In one embodiment, the covalent post-synthetic modification of the HKUST-1 is carried by spray drying a HKUST-1 and a reagent in the presence of a solvent under conditions appropriate for forming a covalent bond between the HKUST-1 and the reagent.

The HKUST-1 material obtained by the present process can be used as such or it can be transformed into a shaped body. In shaped body production, the HKUST-1 can be mixed with further materials, such as, for example, binders, lubricants or other additives, which are added during the production. Likewise, the shaped body may comprise further components such as, for example, adsorbents, such as activated carbon. For the production of these shaped bodies, in principle all suitable methods are possible. Non-limiting methods for producing shaped bodies are:
a) Kneading/pan-grinding the framework material alone or together with at least one binder and/or at least one pasting agent and/or at least one template compound to obtain a mixture; shaping the resultant mixture by means of at least one suitable method such as, for example, extrusion; optionally washing and/or drying and/or calcining the extrudate; and optionally final processing.
b) Tableting or pelleting together with at least one binder and/or other aid.
c) Applying the framework material to at least one porous support material if appropriate.

The resultant material can then be further processed in accordance with the above-described method to give a shaped body.

The method according to the first aspect may also be used to prepare composite materials comprising HKUST-1. "Composite material" is understood, as commonly in the art, as a material made from two or more constituent materials with significantly different physical or chemical properties that, when combined, produce a material with characteristics different from the individual components. The individual components remain separate and distinct within the finished structure.

Thus, the present disclosure also provides a process for the preparation of a HKUST-1-containing composite material, said process comprising:
a) spray drying a metal oxide or hydroxide, a tridentate organic ligand, and a further component in the presence of a solvent, wherein the reaction of the metal oxide or hydroxide with the tridentate organic ligand and the further component to yield the HKUST-1-containing composite and the drying of the obtained HKUST-1-containing composite takes place simultaneously inside the spray dryer, and
c) collecting the dry composite.

The further selected component is not limited. In some embodiments, the further component is an organic or inorganic functional nanomaterial, such as quantum dots, nanoparticles, nanorods, etc. For example, composites can be produced comprising metal or metal oxide nanoparticles and HKUST-1 by the present process. For example, metal nanoparticles (MeNP) may be spray-dried together with the HKUST-1 precursors (metal oxide or hydroxide and tridentate organic ligand) in the presence of a solvent to yield HKUST-1-covered MeNPs (MeNP@HKUST-1). The metal nanoparticles, such as Au, Ag, Pt, Cu, Pd, Re, Zn, Ru, Co, Cd, Al, Ni, or Fe NPs, can be prepared by method known to the skilled person. The combination of HKUST-1 according to the present disclosure and functional components offers a possibility to generate synergetic effect between functional units, thus leading to the creation of multifunctional materials with performance superior to each individual components.

The present disclosure also refers to HKUST-1-containing composites or shaped bodies. Further disclosed are HKUST-1-containing composites or shaped bodies obtained as defined above.

The HKUST-1 obtained by the process of the invention, and/or the shaped bodies and/or composites obtained thereof, can be used for any use in which a highly porous material is needed. Typical uses for HKUST-1 are taking up of at least one substance for its gas storage. Preferably, the at least one substance is a gas, still more preferably, the gas is selected from hydrogen, carbon dioxide, and hydrocarbon. The obtained HKUST-1 and/or the shaped bodies and/or composites obtained thereof can also be used for ionexchange, separation, adsorption, electrocatalysis, drug delivery, sensor, and photodegradation. The obtained HKUST-1 and/or the shaped bodies and/or composites obtained thereof can also be used for encapsulation and controlled release of chemical substances and catalysis. Further, the obtained HKUST-1 and/or the shaped bodies and/or composites obtained thereof can be used for drug delivery, as contrast agents, for air purification, particularly VOC adsorption, for controlled release of active ingredients, or as supercapacitor electrode materials.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### Industrial scale preparation of HKUST-1

The spray-drying production of Cu₃(BTC)₂ is performed by first loading 0.40 M copper(II) hydroxide and 0.26 M trimesic acid under slight agitation in a water:ethanol [7:3 (v/v)] solvent mixture. After 16 h under stirring at room temperature with nitrogen atmosphere, the mixture is directly spray-dried using an industrial-scale spray dryer (GEA surmesure) in a hot chamber at 150 °C.

Spay-drying conditions:
- Liquid feed rate = 6 mL min-1
- Nitrogen flow rate = 403 mL min-1
- Inlet temperature = 150 °C

Dry crystalline Cu₃(BTC)₂ powder was obtained by the above process, without the need to undergo further filtration or redispersion, with a yield of 95%. The specific surface area of the obtained Cu₃(BTC)₂ reaches BET=1600 m²/g.

**Citation List**

## Claims

1. A process for the preparation of a dry crystalline HKUST-1 metal organic framework which comprises:
a) spray drying a metal oxide or hydroxide and a tridentate organic ligand in the presence of a solvent, wherein the reaction of the metal oxide or hydroxide with the tridentate organic ligand to yield the HKUST-1 and the drying of the obtained HKUST-1 take place simultaneously inside the spray dryer, and
b) collecting the formed dry crystalline HKUST-1.

2. The process according to claim 1, wherein the tridentate organic ligand is a compound of formula I: 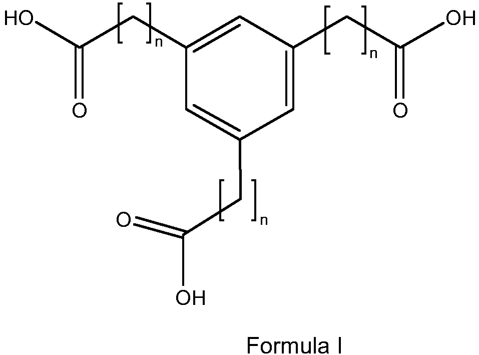 wherein n is an integer from 0 to 3, in particular n is 0 or 1.

3. The process according to claim 2, wherein the ligand is benzene-1,3,5-tricarboxylic acid.

4. The process according to any one of claims 1-3, wherein the metal is a divalent metal selected from the group consisting of Cu²⁺, Zn²⁺, Co²⁺, Be²⁺, Mg²⁺, Ca²⁺, Sr²⁺, Ba²⁺, Sc²⁺, Y²⁺, Ti²⁺, Zr²⁺, V²⁺, Nb²⁺, Ta²⁺, Cr²⁺, Mo²⁺, W²⁺, Mn²⁺, Re²⁺, Fe²⁺, Ru²⁺, Os²⁺, Rh²⁺, Ir²⁺, Ni²⁺, Pd²⁺, Pt²⁺, Ag²⁺, Au²⁺, Cd²⁺, Hg²⁺, B²⁺, Al²⁺, Ga²⁺, In²⁺, Si²⁺, Ge²⁺, Sn²⁺, Pb²⁺, As²⁺, Te²⁺, La²⁺, Ce²⁺, Pr²⁺, Nd²⁺, Sm²⁺, Eu²⁺, Gd²⁺, Tb²⁺, Db²⁺, Tm²⁺, Yb²⁺, and La²⁺.

5. The process according to claim 4, wherein the divalent metal is Cu²⁺.

6. The process according to any one of claims 1-5, wherein the metal oxide or hydroxide is Cu(OH)₂ and the tridentate organic ligand is benzene-1,3,5-tricarboxylic acid.

7. The process according to any of claims 1-6, wherein the solvent is water or a solvent system comprising water, for example a solvent system comprising water consisting of water and ethanol.

8. The process according to any of the claims 1-7, wherein the metal oxide and the organic ligand are placed in contact in the presence of the solvent before spray drying.

9. The process according to claim 8, wherein the metal oxide, organic ligand and solvent are incubated at a temperature at a temperature comprised from 15 °C to 40 °C during a time comprised from 10 to 24 h, in particular, incubated at room temperature during a time comprised from 14 to 18 h.

10. The process according to any one of claims 1-9, wherein the molar ratio of metal oxide or hydroxide to tridentate organic ligand is from 2:1 to 1:1, in particular 1.5:1.

11. The process according to any of the claims 1-10, wherein the spray-drying is carried out at a temperature from 80 to 200 °C, in particular from 125 to 175 °C.

12. The process according to any of the claims 1-11, further comprising heating the obtained dry crystalline HKUST-1 at a temperature from 100 to 200 °C, in particular from 125 to 160 °C.

13. A dry crystalline HKUST-1 obtainable by a process as defined in any one of claims 1-12.

14. The dry crystalline HKUST-1 according to claim 13, which has a specific surface area measured as a BET equal to or greater than 1000 m²/g, in particular, a BET equal to or greater than 1500 m²/g.

15. A composite material or shaped body comprising a dry crystalline HKUST-1 as defined in any one of claims 13-14.
